# EUROPÄISCHE PATENTSCHRIFT

(11) **EP 3 162 730 B1**
(45) Veröffentlichungstag und Bekanntmachung des Hinweises auf die Patenterteilung: **12.12.2018**
(21) Anmeldenummer: 16002211.7
(22) Anmeldetag: 14.10.2016
(51) Int. Cl.: B65D 75/20, B29C 65/08, B29C 65/76, B65B 51/22, B65D 33/24

(54) **VERFAHREN UND VORRICHTUNG ZUM HERSTELLEN VON BEUTELN AUS FOLIE**
DEVICE AND METHOD FOR MANUFACTURING FILM BAGS
PROCÉDÉ ET DISPOSITIF DE PRODUCTION DE SACHETS EN FEUILLE

(30) Priorität: 27.10.2015 DE 102015013908
(43) Veröffentlichungstag der Anmeldung: 03.05.2017
(73) Patentinhaber: Focke & Co. (GmbH & Co. KG), 27283 Verden (DE)
(72) Erfinder: Storcks, Andreas, 21271 Asendorf (DE); Leifheit, Axel, 27336 Häuslingen (DE); Schnakenberg, Jan, 27337 Blender (DE)
(74) Vertreter: Aulich, Martin

(56) Entgegenhaltungen:
- EP-A1- 1 829 789
- EP-A1- 2 292 520
- DE-A1-102011 105 014
- US-A- 3 510 053

## Beschreibung

Die Erfindung betrifft ein Verfahren zum Herstellen von Beuteln mit den Merkmalen des Oberbegriffs des Anspruchs 1. eine Vorrichtung zum Herstellen solcher Beutel mit den Merkmalen des Oberbegriffs des Anspruchs 10 sowie ein Beutel aus Folie mit den Merkmalen des Oberbegriffs des Anspruchs 13.

Beutelpackungen aus Folie sind für Lebens- und Genussmittel unterschiedlichster Art bekannt und im Einsatz. Sie dienen insbesondere auch zur Aufnahme einer Portion geschnittenen Tabaks. In der üblichen Ausführung bildet ein einstückiger (Folien-)Zuschnitt durch Faltung eine Tasche mit Taschen-Vorderwand und Taschen-Rückwand zur Aufnahme des Beutelinhalts. Die Tasche ist seitlich durch Verbindungsnähte - Taschennähte - begrenzt. Eine Füll- und Entnahmeöffnung der Tasche ist üblicherweise mit einer Verschlussnaht versehen. Des Weiteren ist es üblich, durch entsprechende Verlängerung der Taschen-Rückwand eine Verschlusslasche zu bilden, die gegen die Taschen-Vorderwand faltbar ist und beispielsweise in der Ausführung als Wickellasche um die Tasche herumgefaltet und an der Taschen-Rückwand fixiert ist (siehe zum Beispiel EP 2 292 520). In Erweiterung dieses Gedankens ist zudem bekannt, die Verschlusslasche doppellagig auszubilden durch Umfalten eines Verschlusslaschenfortsatzes gegen eine bzw. die Innenseite. Die Verschlusslasche weist dann insofern eine Außenlage und eine durch den Fortsatz gebildete Innenlage auf.

Im Stand der Technik werden die Außenlage und die Innenlage der Verschlusslasche durch seitliche Verbindungsnähte bzw. Laschennähte fixiert. Es ist bekannt, diese Verbindungsnähte durch Aufbringen von Wärme und Druck mittels Siegelorganen zu fertigen, siehe zum Beispiel DE 10 2011 105 014 A1.

Der Erfindung liegt die Aufgabe zugrunde, Beutel, Verfahren sowie Vorrichtung weiterzuentwickeln. Zur Lösung dieser Aufgabe weist das eingangs genannte Verfahren die Merkmale des Anspruchs 1 auf.

Die Außenlage und die Innenlage der Verschlusslasche werden lösbar miteinander verbunden, indem auf einer oder beiden Lagen aufgetragenes Hotmelt-Material zur Verbindung dieser Lagen mit Ultraschall aktiviert wird. Anders als im Stand der Technik werden die beiden Lagen der Verschlusslasche daher nicht mit auf dem Aufbringen von Druck und Wärme basierenden Siegeltechniken verbunden, sondern die Lagen-Verbindungen werden mit Hotmelt verklebt und mit Ultraschall aktiviert. Es hat sich gezeigt, dass mit Ultraschall aktivierbare Hotmelt-Verbindungen hierfür besonders geeignet sind.

Insbesondere durch zieloptimierte Auswahl der Art des verwendeten Hotmelt-Materials, der für der Verbindungen notwendigen Menge desselben, sowie der Dauer und der Frequenz der Ultraschallbeaufschlagung ist eine sehr gute Steuerung bzw. Dosierung von Eigenschaften der Verbindungen zwischen Innenlage und Außenlage möglich, wie etwa der Festigkeit derselben.

Besonders vorteilhaft ist, dass die Verbindungen zwischen Innenlage und Außenlage erfindungsgemäß so hergestellt werden, dass diese von einem Benutzer (zerstörungsfrei) gelöst werden können. Der Benutzer könnte dann die Innenlage in den Verbindungsbereichen von der Außenlage trennen, sodass die Verschlusslasche nur noch einlagig, allerdings um die Fläche der Innenlage vergrößert wäre. Die dann vergrößerte Verschlusslasche könnte von dem Benutzer gegen die Taschen-Vorderwand, um die untere Beutelkante herum und - entweder im Gegensatz zum doppellagigen Zustand oder, falls dies die Größe der Verschlusslasche bereits im doppellagigen Zustand zugelassen hätte, weiter als im doppellagiger Zustand - über bzw. an die Taschenrückwand geführt bzw. gefaltet werden.

Bevorzugt werden die Beutel im Rahmen des Herstellprozesses aus einer fortlaufenden Folienbahn gefertigt, die eine Faltstation durchläuft, in der fortlaufende Bahnschenkel (mit einer Querabmessung) entsprechend der Abmessung der jeweiligen Innenlage der jeweiligen Verschlusslasche gefaltet und die fortlaufenden Bahnschenkel auf einen die Außenlage der jeweiligen Verschlusslasche bildendenden Folienstreifen der fortlaufenden Folienbahn aufgelegt werden.

Vorzugsweise werden die fortlaufenden Bahnschenkel im Herstellungsprozess gefaltet, indem die ungefaltete Folienbahn in der Faltstation zwischen zwei die Folienbahn seitlich führenden Führungsorganen der Faltstation geführt wird, zwischen denen sie mit gefaltetem Bahnschenkel verläuft und deren Abstand so bemessen ist, dass er der um die Querabmessung des Bahnschenkels reduzierten Querabmessung der ungefalteten Folienbahn entspricht, sodass sich zwischen einem Bereich stromauf der Führungsorgane, in dem die Folienbahn noch ungefaltet verläuft und den Führungsorganen, zwischen denen die Folienbahn gefaltet verläuft, ein Umfaltbereich einstellt, in dem der Übergang von dem ungefalteten in den gefalteten Zustand erfolgt. Bevorzugt wird die Folienbahn dabei entlang einer Umlenk- oder Führungswalze geführt, an der in dem vorgenannten Abstand die Führungsorgane angeordnet sind. Bevorzugt ist jedes Führungsorgan dabei als die Folienbahn seitlich führende Führungsscheibe ausgebildet.

Erfindungsgemäß wird das der Verbindung von Außenlage und Innenlage dienende Hotmelt-Material auf die fortlaufende, insbesondere noch ungefaltete Folienbahn innerhalb des Fertigungsprozesses der Beutel aufgetragen, insbesondere stromauf der Faltstation.

Das Hotmelt-Material kann als Streifen aufgetragen werden, insbesondere mittels Kontaktleimdüsen. Mit den Kontaktleimdüsen können vorzugsweise einzelne separate Streifen auf die Folienbahn aufgebracht werden.

Das Hotmelt-Material kann beispielsweise mit einer Breitschlitzdüse alternativ auch vollflächig unter Bildung nur eines einzelnen, die Innenlage und die Außenlage vollflächig verbindenden Streifens aufgebracht werden.

Das Hotmelt-Material kann in einer weiteren Alternative auch punktförmig aufgebracht werden, insbesondere mittels einer oder mehreren Punktleimdüsen.

Das der Verbindung von Außenlage und Innenlage dienende, auf der Folienbahn aufgetragene Hotmelt-Material wird so positioniert, dass die Innenlage und die Außenlage der jeweiligen Verschlusslasche nach dem Aktivieren des Hotmelt-Materials durch seitliche Verbindungsnähte miteinander verbunden sind. Alternativ kann zusätzlich eine weitere, quer zu den seitlichen Verbindungsnähten gerichtete, die Verschlusslasche im Endbereich der Außenlage mit der Innenlage verbindende Verbindungsnaht vorgesehen sein.

Vorzugsweise ist das Hotmelt-Material so auf der Folienbahn positioniert, dass das bei Auflegen der gefalteten Bahnschenkel auf den die jeweiligen Außenlage bildenden Folienstreifen auf dem Bahnschenkel aufgetragenes Hotmelt-Material, zugeordnetes, auf diesem Folienstreifen aufgetragenes Hotmelt-Material überdeckt.

Was die Aktivierung des Hotmelt-Materials im Bereich einer Aktivierungsstation betrifft, so beaufschlagt in dieser mindestens eine Ultraschall-Sonotrode das entsprechende, auf die Folienbahn aufgetragene Hotmelt-Material mit Ultraschall. Die mindestens eine Ultraschall-Sonotrode wird dabei vorzugsweise zur Aktivierung des Hotmelt-Materials zur Anlage an die Folienbahn gebracht.

Nach dem Verbinden der Innenlage mit der Außenlage kann die Folienbahn zweckmäßigerweise zu nachfolgenden Einrichtungen gefördert werden, die aus der Folienbahn die Beutel als einzelne Abschnitte der Folienbahn endfertigen, insbesondere die Taschen bilden und die die Beutel bildenden, einzelnen Abschnitte von der fortlaufenden Folienbahn trennen.

Die eingangs genannte Vorrichtung weist in Weiterführung der obigen Gedanken die Merkmale des Anspruchs 10 auf.

Erfindungsgemäß ist sie durch ein entsprechendes Ultraschall-Aktivierungsorgan gekennzeichnet, mit dem auf einer oder beiden Lagen aufgetragenes Hotmelt-Material zur Verbindung dieser Lagen durch Beaufschlagung mit Ultraschall aktivierbar ist. Das Ultraschall-Aktivierungsorgan ist vorzugsweise stromab der Faltstation angeordnet und insbesondere mittels eines Servoantriebs gegen die fortlaufende Folienbahn verfahrbar.

Zum Aufbringen des Hotmelt-Materials ist dabei stromauf der Faltstation eine Hotmelt-Auftragseinrichtung mit ein oder mehreren Leimauftragsdüsen angeordnet, mit der Hotmelt-Material so auf die ungefaltete Folienbahn auftragbar ist, dass die Innenlage und die Außenlage der jeweiligen Verschlusslasche nach dem Aktivieren des Hotmelt-Materials durch das Ultraschall-Aktivierungsorgan verbunden sind, insbesondere durch seitliche Verbindungsnähte aus dem Hotmelt-Material.

Vorzugsweise werden die Faltstation und das Ultraschall-Aktivierungsorgan in einem separierbaren Modul der Vorrichtung ausgeführt.

Der eingangs genannte Beutel ist gemäß Anspruch 13 erfindungsgemäß dadurch gekennzeichnet, dass die Außenlage und die Innenlage der Verschlusslasche lösbar durch durch Ultraschall aktivierbares Hotmelt-Material miteinander verbunden sind.

Die Verbindung erfolgt entweder vollflächig durch mit Ultraschall aktivierbares Hotmelt-Material oder durch entsprechende seitliche Verbindungsnähte aus dem durch Ultraschall aktivierbaren Hotmelt-Material. Und gegebenenfalls zusätzlich durch eine weitere, quer zu den seitlichen Verbindungsnähten gerichtete, die Verschlusslasche im Endbereich der Außenlage mit der Innenlage verbindende Verbindungsnaht.

Die zusätzliche Verbindungsnaht kann sich dabei an beiden Enden unmittelbar bis zu den seitlichen Verbindungsnähten erstrecken und jeweils lückenlos an diese anschließen.

Weitere Merkmale der vorliegenden Erfindung ergeben sich aus den beigefügten Patentansprüchen, der nachfolgenden Beschreibung bevorzugter Ausführungsbeispiele der Erfindung sowie aus den beigefügten Zeichnungen.

Darin zeigt:
- Fig. 1: einen Beutel mit geschlossener Verschlusslasche in perspektivischer Darstellung,
- Fig. 2: den Beutel aus Fig. 1 mit geöffneter Verschlusslasche,
- Fig. 3: den Beutel aus Fig. 2 mit teilgelöster Innenlage der Verschlusslasche,
- Fig. 4: einen ersten alternativen Beutel in einer Darstellung entsprechend Fig. 2,
- Fig. 5: einen zweiten alternativen Beutel in einer Darstellung entsprechend Fig. 3,
- Fig. 6: eine schematische Darstellung eines Teils einer Vorrichtung zum Herstellen von Beuteln in Draufsicht,
- Fig. 7: einen Teilbereich der Fig. 6 in Blickrichtung V,
- Fig. 8: eine Darstellung entsprechend Fig. 7, allerdings mit einer Anzahl von Einzelleimdüsen anstelle der in Fig. 7 gezeigten Kontaktleimdüse,
- Fig. 9: eine Darstellung entsprechend Fig. 7, allerdings mit einer Breitschlitzdüse für einen vollflächigen Leimauftrag,
- Fig. 10: eine Faltstation zum Falten fortlaufender Bahnschenkel als Alternative zu der in Fig. 6 gezeigten Faltstation,
- Fig. 11: die Faltstation aus Fig. 6 in Blickrichtung VIII,
- Fig. 12: eine Ansicht der Ultraschall-Aktivierungsstation aus Fig. 6 in Blickrichtung IX,
- Fig. 13: eine Ansicht der Ultraschall-Aktivierungsstation aus Fig. 6 in Blickrichtung IX, allerdings mit vollflächig von der Breitschlitzdüse aus Fig. 9 beleimter Innen- und Außenlage der Verschlusslasche.

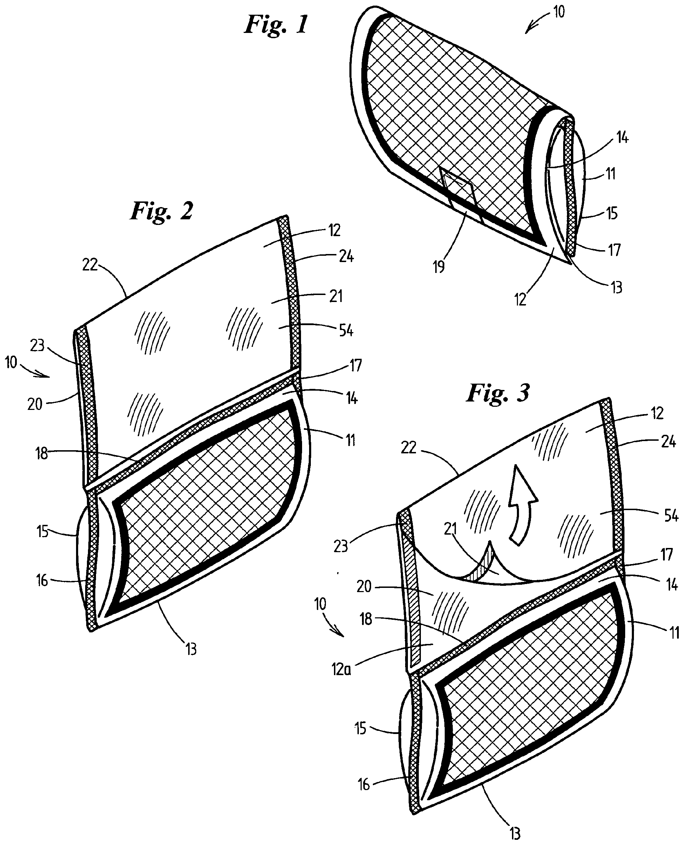

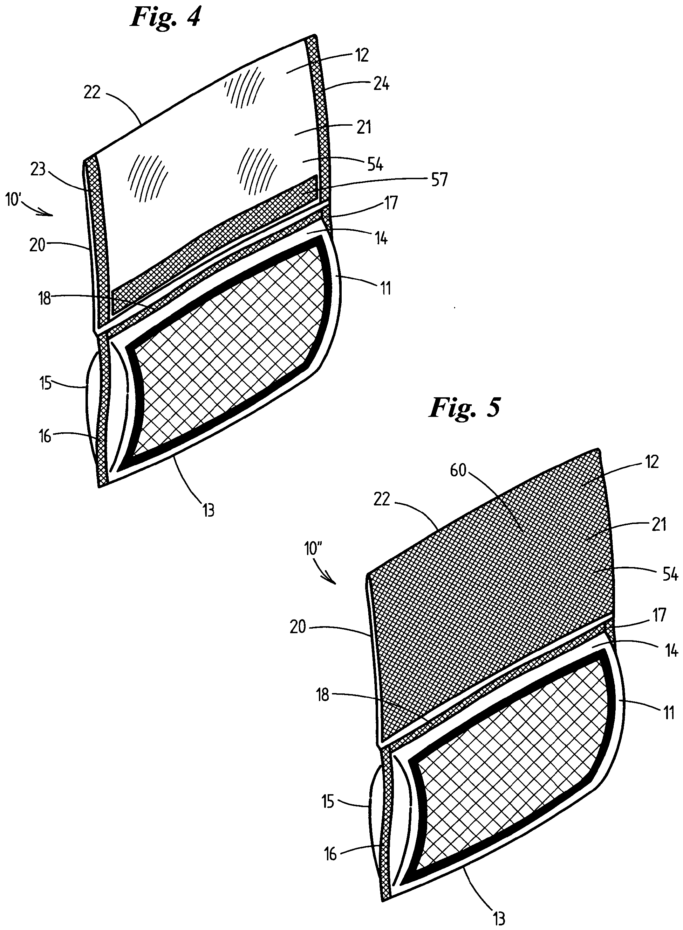

Es geht in den Zeichnungen um die Ausbildung und Fertigung von Beuteln 10 (vgl. Fig. 1-3) und alternativer Beutel 10' sowie 10" (vgl. Fig. 4, 5) weiten Teilen.

Gemäß dem gezeigten Aufbau besteht der bzw. jeder Beutel 10, 10' bzw. 10" aus einer Tasche 11 und einer Verschlusslasche 12. Die Tasche 11 nimmt den Beutelinhalt auf, insbesondere eine Portion aus geschnittenem Tabak. Die Beutel 10, 10' bzw. 10" gleichen sich in weiten Teilen bzw. unterscheiden sich nur in Bezug auf die Ausbildung/Herstellung der Verschlusslasche 12. Auf diese Abweichungen wird nachfolgend jeweils an geeigneter Stelle explizit eingegangen.

Der bzw. jeder Beutel 10, 10', 10" besteht vorzugsweise aus einem einzigen, langgestreckten, rechteckigen Zuschnitt der Folie. Durch Umfalten entlang einer (unteren) Faltkante 13 entsteht die Tasche 11 mit Taschen-Vorderwand 14 und Taschen-Rückwand 15. Diese sind seitlich durch (quergerichtete) Taschennähte 16, 17 miteinander verbunden, wobei die Taschennähie 16, 17 vorzugsweise durch thermisches Siegeln hergestellt sind. Die Tasche 11 weist eine in den Zeichnungen (noch) geschlossene Taschenöffnung auf, die das Einfüllen und die Entnahme des Beutelinhalts ermöglicht. Die Taschenöffnung ist durch eine längsgerichtete Verschlussnaht 18 verschlossen. Vorzugsweise ist diese als (mehrfach benutzbare) Peel-Seal-Naht ausgebildet.

Die Taschen-Rückwand 15 ist über die Taschenöffnung hinaus verlängert. Die Verlängerung bildet die Verschlusslasche 12. Diese wird gegen die Taschen-Vorderwand 14 gefaltet und in Schließstellung mit einem Klebestreifen bzw. einem Tape 19 fixiert, vgl. Fig. 1. Die Verschlusslasche 12 erstreckt sich in der gezeigten Ausführungsform bis in den Bereich der Faltkante 13.

Die Verschlusslasche 12 kann alternativ auch als Wickellasche ausgebildet sein, die sich in Schließstellung aufgrund entsprechender Abmessung bis in den Bereich der Taschen-Rückwand 15 erstreckt und mindestens einen der Faltkante 13 zugekehrten Bereich der Taschen-Rückwand 15 abdeckt.

Die Verschlusslasche 12 ist in besonderer Weise ausgebildet, nämlich zweilagig mit einer Außenlage 20 und einer Innenlage 21. Die Lagen 20, 21 liegen dicht aneinander. Die Innenlage 21 wird durch einen Laschenfortsatz 54 gebildet, der entsprechend entlang einer Laschenkante 22 gegen eine Innenseite 12a der Verschlusslasche 12 umgefaltet ist.

Vorliegend erstreckt sich die Innenlage 21 im Wesentlichen über die volle Fläche der Verschlusslasche 12 bzw. der Außenlage 20. Die Bemessung und Gestaltung der Innenlage 21 kann von der vorstehenden Ausführungsform abweichen. Insbesondere kann es sinnvoll sein, dass sich die Innenlage 21 nur in einem Teilbereich der Verschlusslasche 12 erstreckt.

Die Lagen 20, 21 der Verschlusslasche 12 sind miteinander - bereichsweise oder vollflächig - verbunden, um deren Relativstellung zu fixieren.

Diese Verbindungen sind bei den Beuteln 10', 10" der Fig. 4 bzw. 5 wie bei dem Beutel 10 lösbar ausgebildet.

Zu diesem Zweck sind bei dem Beutel 10 entsprechend lösbare (seitliche) (Quer-)Verbindungsnähte 23, 24 vorgesehen. Anstelle der gezeigten seitiichen Verbindungsnähte 23, 24 können theoretisch auch weiter innen liegende Verbindungsstellen oder Nähte vorgesehen sein.

Ein Benutzer kann, vgl. Fig. 3, die Verbindung der Innenlage 21 mit der Außenlage 20 bei dem Beutel 10 (auf-)trennen, vorliegend die Verbindungsnähte 23, 24.

Die Verbindungsnähte 23, 24 sind zu diesem Zweck besonders ausgebildet. Sie bestehen aus Hotmelt-Material, das mittels Ultraschall aktiviert wird, um die gewünschten Klebeeigenschaften zu bewirken.

Zudem ist bei dem Beutel 10' zusätzlich zu den lösbaren ausgebildeten seitlichen Verbindungsnähten 23, 24 noch eine längsgerichtete, quer zu den Verbindungsnähten 23, 24 verlaufende, lösbare Verbindungsnaht 57 vorhanden, die als Verschlussnaht dient und die eine andernfalls durch die Lagen 20, 21 gebildete Öffnung der Verschlusslasche 12 dauerhaft verschließt. Die Verbindungsnaht 57 ist dabei im Endbereich der Lage 21 angeordnet bzw. im Bereich des freien Ende derselben. Eine solche zusätzliche Verbindungsnaht 57 könnte theoretisch auch bei dem Beutel 10 vorgesehen werden.

Bei dem Beutel 10" sind die Lagen 20, 21 ebenfalls lösbar miteinander verbunden. Anstelle separate seitliche Verbindungsnähte 23, 24 und ggf. eine zusätzliche separate Verbindungsnaht 57 zu verwenden sind die beiden Lagen 20, 21 allerdings vollflächig miteinander verbunden.

Die vollflächige Verbindung der Lagen 20, 21 des Beutels 10" wird dabei durch mittels Ultraschall aktiviertes Hotmelt-Material erreicht.

Die in der beschriebenen Weise ausgebildeten Beutel 10, 10', 10" werden aus bzw. von einer fortlaufenden Folienbahn 25 hergestellt. Diese wird von einem Vorrat abgezogen, nämlich von einer Bobine 26. Die Folienbahn 25 durchläuft während der Beutelproduktion mehrere Einrichtungen und Stationen, von denen in den Zeichnungen nur diejenigen gezeigt sind, die mit der Herstellung der Verschlusslasche 12 in Zusammenhang stehen.

Dies sind insbesondere eine Auftragseinrichtung 27 zum Auftragen von Hotmelt-Material, eine Faltstation 28 und eine Aktivierungsstation 29 zum Aktivieren des Hotmelt-Materials 30.

Die Folienbahn 25 wird vorzugsweise kontinuierlich von der Bobine 26 (mit aufrechter Drehachse) abgezogen und über Umlenkwalzen geführt. Im Bereich der Auftragseinrichtung 27 und der nachfolgenden Stationen wird die Folienbahn 25 vorzugsweise taktweise gefördert, und zwar vorliegend in Abschnitten entsprechend der Breite eines Beutels 10, insbesondere in Abstimmung mit der Aktivierungsstation 29.

Zwischen der Auftragseinrichtung 27 und der Bobine 26 bzw. stromauf der Faltstation 28 bzw. stromauf der Auftragseinrichtung 27 ist ein Organ 31 zum Ausgleich der Bewegungen zwischen der zuvor kontinuierlichen Förderbewegung der Folienbahn 25 beim Abziehen derselben von der Bobine 26 und der anschließenden taktweisen Förderung positioniert. Im vorliegenden Fall ist dies ein Folienbahnspeicher. Dieser kann beispielsweise als Pendel ausgebildet sein oder alternativ - wie im vorliegenden Fall - auch als sogenannter Schlaufenkasten. Innerhalb des Schlaufenkastens wird die Folienbahn 25 über zwei mit Abstand zueinander angeordnete Umlenkwalzen so geführt, dass sich in bekannter Weise nach hinten bzw. winklig (insbesondere quer) zur gemeinsamen Ebene der Umlenkwalzen eine Schlaufe ausbildet, deren Länge von einem Sensor 55 (insbesondere kontinuierlich) überwacht wird. Die Schlaufe ist nach vorne hin bzw. zwischen den beiden Umlenkwalzen offen. An dieser offenen Schlaufenseite ist ein Sensor 55 positioniert. Der Sensor 55, der bevorzugt als Ultraschallsensor ausgebildet ist, überwacht die Schlaufenlänge. Abhängig von der Schlaufenlänge wird die Geschwindigkeit variiert, mit der die Folienbahn 25 von der Bobine 26 abgezogen wird.

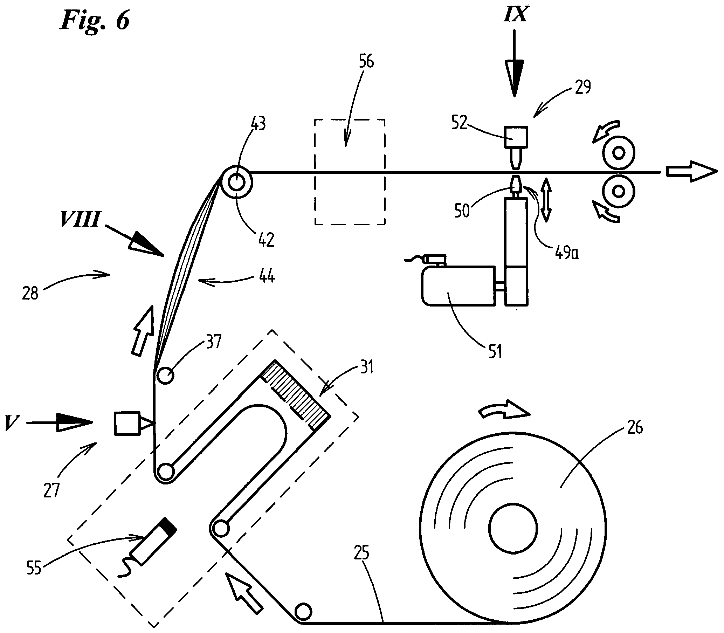

Alternativ kann das Ausgleichsorgan 31 auch zwischen Faltstation 28 und Aktivierungsstation 29 angeordnet sein (vgl. Bezugsziffer 56 in Fig. 6), sodass sowohl das Auftragen des Hotmelt-Materials 30 durch die Auftragseinrichtung 27 als auch das Falten der Folienbahn in der Faltstation 28 bei kontinuierlicher Förderung der Folienbahn 25 erfolgen würde, das nachfolgende Aktivieren des Hotmelt-Materials 30 in der Aktivierungsstation 29 dagegen bei taktweiser Förderung der Folienbahn 25.

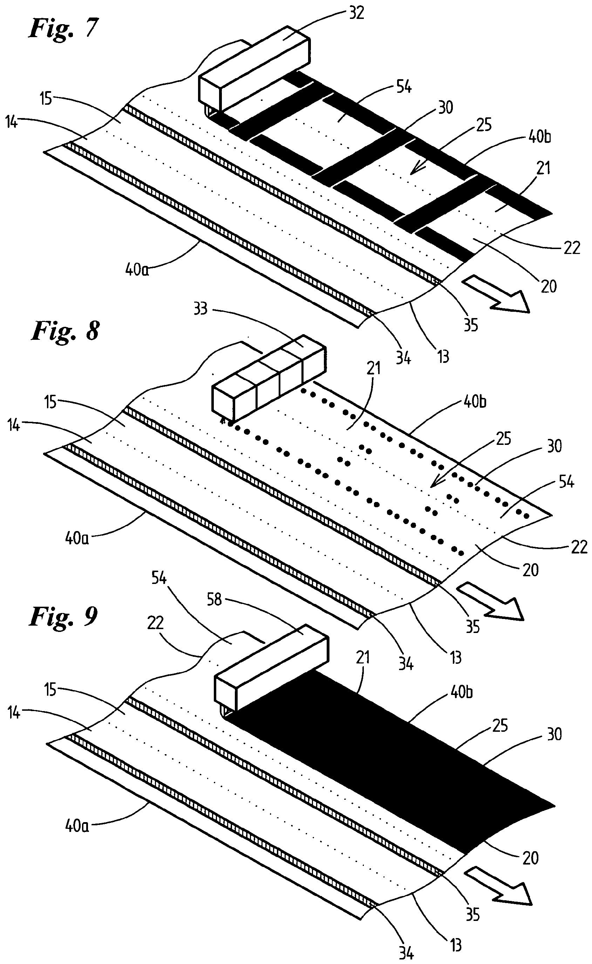

Im Bereich der Auftragseinrichtung 27 kann das Hotmelt-Material 30 beispielsweise streifenförmig, vgl. Fig. 7, oder in einer ersten alternativen Ausführungsform als Reihe fortlaufender, voneinander beabstandeter Punkte punktförmig aufgebracht werden, vgl. Fig. 8. In einer zweiten alternativen Ausführungsform kann das Hotmelt-Material 30 auch vollflächig aufgebracht werden, vgl. Fig. 9.

Zum Aufbringen des Hotmelt-Materials 30 in Streifenform können ein oder mehrere Kontaktleimdüsen 32 verwendet werden, zum Aufbringen von Leimpunkten entsprechend ein oder mehrere Punktleimdüsen 33, zum Aufbringen eines vollflächigen Leimauftrags bzw. einer vollflächigen Leimschicht beispielsweise eine Breitschlitzdüse 58.

Im Ausführungsbeispiel gemäß Fig. 7 erstrecken sich Hotmelt-Streifen (im alternativen Ausführungsbeispiel entsprechend Fig. 8 die Hotmelt-Punktreihe) sowohl als separate Streifen quer zur Längsrichtung der Folienbahn 25 jeweils an beiden Seiten der späteren Verschlusslasche 12 als auch als (beispielsweise zwei) separate, voneinander beabstandete durchgehende (schmale) Streifen in Längsrichtung.

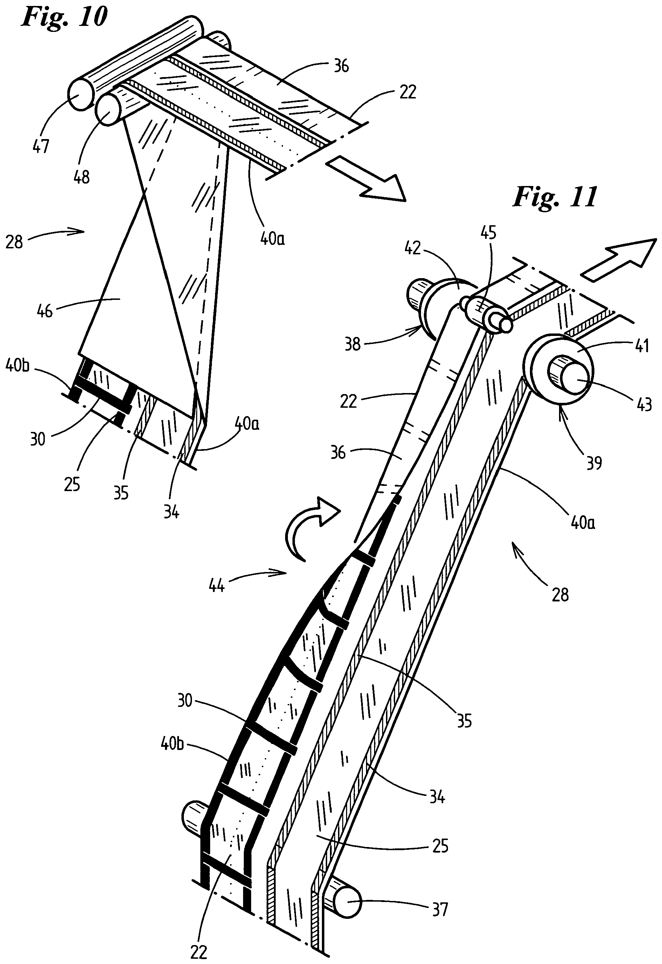

Die Querstreifen bzw. die Quer-Punktreihen sind so positioniert, dass bei Falten der in Fig. 7 noch ungefalteten Folienbahn 25 um die Laschenkante 22 jeweils einander zugeordnete Abschnitte desselben Hotmelt-Streifens (bzw. der Hotmelt-Punktreihe) der Innenseite der Innenlage 21 und der Innenseite der Außenlage 20 aufeinander zu liegen kommen, vgl. auch Fig. 11-13. Die Querstreifen bilden bei den späteren Beuteln 10 oder 10' die seitlichen (lösbaren bzw. unlösbaren) Verbindungsnähte 23, 24.

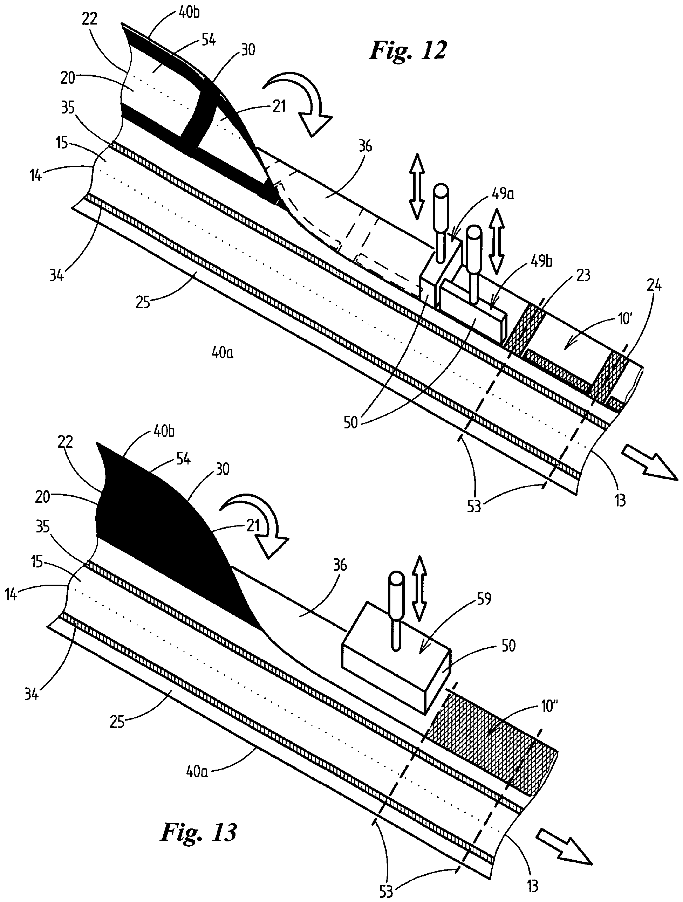

Die beiden separaten Längsstreifen sind so positioniert, dass bei dem vorgenannten Falten um die Laschenkante 22 jeweils der eine Längsstreifen auf dem anderen Längsstreifen zu liegen kommt, vgl. auch Fig. 11 und 12. Die beiden Längsstreifen bilden bei dem späteren Beutel 10' gemeinsam die quer zu den seitlichen Verbindungsnähten verlaufende Verbindungsnaht 57.

Im Ausführungsbeispiel gemäß Fig. 9 wird Hotmelt 30 in einem einzelnen bzw. einzigen, vollflächigen, durchgehenden Streifen entsprechend vollflächig so auf die Folienbahn 25 aufgebracht, dass im Wesentlichen die gesamte innenseite der inneniage 21 und im Wesentlichen die gesamte Innenseite der Außenlage 20 mit Hotmelt versehen ist. Nach Faltung um die Laschenkante 22 wird entsprechend die vollflächige Verbindung von Innenlage 21 und Außenlage 20 gebildet, wie dies bei dem Beutel 10" der Fall ist.

Alternativ zu dem Auftragen des Hotmelt-Materials 30 während des Herstellungsprozesses der Beutel 10, 10', 10" ist auch denkbar, das Hotmelt-Material 30 bereits zuvor außerhalb des Herstellungsprozesses positionsgenau aufzubringen. Dies kann beispielsweise durch den Hersteller der Folienbahn 25 geschehen. Dies ist jedoch keine erfindungsgemäße Alternative.

Im vorliegenden Ausführungsbeispiel sind beispielsweise Hotmelt-Materialstreifen 34, 35, die sich parallel zu den Längsaußenkanten 40a, 40b der Folienbahn 25 erstrecken, bereits vor dem Beutelherstellungsprozess auf die Folienbahn 25 aufgebracht worden. Die Hotmelt-Materialstreifen 34, 35 bilden später nach entsprechender Faltung der Folienbahn 25 um die in an sich bekannter Weise um die (untere) Faltkante 13 die Verschlussnaht 18 der Tasche 11 des jeweiligen Beutels 10. Die Hotmelt-Materialstreifen 34, 35 können ebenfalls durch Ultraschall aktiviert werden (nicht gezeigt).

In der Faltstation 28 werden durch Umfalten der Folienbahn 25 entlang der späteren Laschenkante 22 fortlaufende Bahnschenkel 36 gebildet, und zwar mit Querabmessungen, die den Querabmessungen der Innenlage 21 entsprechen.

Hierzu verfügt die Faltstation 28 über eine Umlenkwalze 37, an der die noch ungefaltete Folienbahn 25 umgelenkt wird in Richtung zweier mit Abstand zueinander angeordneter Führungsorgane 38, 39, die die dann allerdings nicht mehr ungefaltete Folienbahn 25 seitlich führen. Der Abstand der beiden Führungsorgane 38, 39 ist so bemessen, dass er der um die Querabmessung des Bahnschenkels 36 reduzierten Querabmessung der ungefalteten Folienbahn 25 entspricht. Bei erstmaligem Einlegen einer neuen Folienbahn 25 in die Herstellvorrichtung bzw. zwischen die Führungsorgane 38, 39, wird händisch ein erster Bahnschenkel 36 gefaltet und die in ihrer Breite auf diese Weise reduzierte Folienbahn 25, deren Längskanten dann zum einen durch die ursprüngliche Längsaußenkante 40b, zum anderen durch die Laschenkante 22 gebildet wird, zwischen die Führungsorgane 38, 39 gelegt.

Die Führungsorgane 38, 39 umfassen im vorliegenden Ausführungsbeispiel Scheiben 41, 42 (Bordscheiben), die in dem zuvor beschriebenen Abstand auf einer Umlenkwalze 43 positioniert sind. Die in ihrer Querabmessung reduzierte Folienbahn 25 (mit gefaltetem Bahnschenkel 36) wird entlang der Umlenkwalze 43 geführt und durch die Scheiben 41, 42 bzw. die Führungsorgane 38, 39 jeweils seitlich begrenzt.

Durch das vorstehend beschriebene Zusammenwirken der einzelnen Organe/Bauteile der Faltstation 28 stellt sich zwischen der Umlenkwalze 37 einerseits und den auf der Umlenkwalze 43 positionierten Führungsorganen 38, 39 andererseits ein Umfaltbereich 44 ein, in dem während des Herstellungsprozesses taktweise (oder alternativ kontinuierlich) fortlaufende bzw. aneinander anschließende Bahnschenkel 36 gefaltet werden.

In Fig. 11 ist ein weiteres Führungsmittel 45 gezeigt, dass im Bereich der Führungsorgane 38, 39 oberhalb der Folienbahn 25 positioniert ist und nach Art einer Andrückrolle an der Folienbahn anliegt. Durch den Anlagedruck sorgt das Führungsorgan 45 dafür, dass sich die gefaltete Folienbahn 25 nicht ungewollt seitlich in Richtung der einen oder der anderen Führungsscheibe 41, 42 bewegt und dabei beispielsweise Falten wirft.

Ein Alternative zu der vorstehend beschriebenen Faltstation 28 ist in Fig. 10 gezeigt. Die dort offenbarte Faltstation 44 verfügt über ein flächiges Faltteil 46, im vorliegenden Fall ein Faltdreieck, das so positioniert ist und so mit einem stromabwärts schräg versetzt positionierten Paar gegenüberliegender Umlenkrollen 47, 48 zusammenwirkt, dass die vor dem Faltteil 46 ungefaltete Folienbahn 25 zwischen den Umlenkrollen 47, 48 in bereits gefaltetem Zustand geführt werden kann, nämlich mit gefaltetem Bahnschenkel 36.

In der stromab der Faltstation 28 angeordneten Aktivierungsstation 29 werden in der in Fig. 12 gezeigten Ausführungsform die Verbindungsnähte 23, 24 und 57 hergestellt. Zu diesem Zweck verfügt die Aktivierungsstation 29 über zwei Aktivierungsorgane 49a, b, die jeweils eine Ultraschallsonotrode 50 umfassen bzw. als solche ausgebildet sind.

Bei der in Fig. 13 gezeigten alternativen Ausführungsform, in der die vollflächige Verbindung 60 hergestellt wird, ist dagegen nur ein Aktivierungsorgan 59 notwendig.

Das Hotmelt-Material 30 wird durch das oder die Aktivierungsorgane 49a, b bzw. 59 durch Ultraschall aktiviert.

Mittels eines Servoantriebs 51 kann das jeweilige Aktivierungsorgan 49a, b oder ggf. das Aktivierungsorgan 59 gegen die Materialbahn 25 gefahren werden. Ein jeweiliges entsprechendes Gegenorgan (Ambos) 52 auf der gegenüberliegenden Seite sorgt für Gegendruck beim Beaufschlagen der Folienbahn 25 mit Ultraschall im Bereich des aufgetragenen Hotmelt-Materials 30.

Die Aktivierungsorgane 49a, b bzw. 59 beaufschlagen die Folienbahn 25 in den Bereichen des Hotmelt-Materials 30 daher (in Zusammenwirken mit dem jeweiligen Gegenorgan 52) zudem mit Druck.

Die Prozessparameter, mit denen die Aktivierungsorgane 49a, b bzw. 59 betrieben werden, sowie Art und Menge des Hotmelt-Materials 30 werden so gewählt, dass die jeweiligen Verbindungsnähte 23, 24, 57 bzw. die Verbindung 60 der Außenlage 20 und der Innenlage 21 in Bezug auf Festigkeit bzw. gegebenenfalls in Bezug auf Lösbarkeit (Beutel 10) die gewünschten Eigenschaften aufweisen.

Nach dem Durchlaufen der Aktivierungsstation 29 wird die Folienbahn 25 entlang weiterer Einrichtungen und Organe der Gesamtvorrichtung zur Herstellung der Beutel 10 geführt (nicht dargestellt), in denen die Beutel 10 endgefertigt werden. Hierfür geeignete Einrichtungen sind beispielsweise in der DE 10 2011 105 014 A1 beschrieben.

Im Rahmen der weiteren Fertigung wird unter anderem die Tasche 11 gebildet. Hierfür wird die Folienbahn 25 um die Faltkante 13 gefaltet. Dabei kommen die Hotmelt-Streifen 34, 35 aufeinander zu liegen. Diese können - wie bereits angedeutet - ebenfalls durch Ultraschallaktivierung und ggf. das Beaufschlagen mit Druck miteinander verbunden werden. Die quer verlaufenden Taschennähte 16, 17 können ohne Einsatz von entsprechendem Hotmelt-Material durch thermische Siegelung bzw. Folienverschweißen hergestellt werden. Es ist aber denkbar, auch für diese Taschennähte 16, 17 Hotmelt-Material einzusetzen, dass entsprechend mit Ultraschall aktiviert wird.

Schließlich werden durch eine Trenneinrichtung im Weiteren (ebenfalls nicht gezeigt) querverlaufende Trennschnitte in die Folienbahn 25 eingebracht zur Bildung der einzelnen Beutel 10. Die Trennung erfolgt dabei bevorzugt, wie in den Fig. 12, 13 durch die gestrichelten Linien 53 angedeutet, mittig durch die Verbindungsnähte 23, 24 bzw. lagegerecht durch die vollflächige Verbindung 60.

Die in der Fig. 6 gezeigten Einrichtungen bzw. die Einrichtungen, die zur Herstellung der doppellagigen Verschlusslasche 12 in der gezeigten Weise dienen, können auch als eigenständiges, separierbares Modul der Vorrichtung zum Herstellen der Beutel ausgebildet sein. Ein solches Modul könnte dann beispieisweise nur bei Bedarf zugestellt werden, wenn Beutel hergestellt werden sollen, deren Verschlusslaschen 12 in der beschriebenen Weise doppellagig ausgebildet werden sollen.

### Bezugszeichenliste:

| | | | |
|---|---|---|---|
| 10 | Beutel | 36 | Bahnschenkel |
| 10' | Beutel | 37 | Umlenkwalze |
| 10'' | Beutel | 38 | Führungsorgan |
| 11 | Tasche | 39 | Führungsorgan |
| 12 | Verschlusslasche | 40a | Längsaußenkante |
| 12a | Innenseite Verschlusslasche | 40b | Längsaußenkante |
| 13 | Faltkante | 41 | Scheibe |
| 14 | Taschen-Vorderwand | 42 | Scheibe |
| 15 | Taschen-Rückwand | 43 | Umlenkwalze |
| 16 | Taschennaht | 44 | Umfaltbereich |
| 17 | Taschennaht | 45 | Führungsmittel |
| 18 | Verschlussnaht | 46 | Faltteil |
| 19 | Tape | 47 | Rolle |
| 20 | Außenlage | 48 | Rolle |
| 21 | Innenlage | 49a | Aktivierungsorgan |
| 22 | Laschenkante | 49b | Aktivierungsorgan |
| 23 | Verbindungsnaht | 50 | Ultraschallsonotrode |
| 24 | Verbindungsnaht | 51 | Servoantrieb |
| 25 | Folienbahn | 52 | Gegenorgan |
| 26 | Bobine | 53 | Linien |
| 27 | Auftragseinrichtung | 54 | Laschenfortsatz |
| 28 | Faltstation | 55 | Sensor |
| 29 | Aktivierungsstation | 56 | Alternative Anordnung Ausgleichsorgan |
| 30 | Hotmelt-Material | 57 | Verbindungsnaht |
| 31 | Ausgleichsorgan | 58 | Breitschlitzdüse |
| 32 | Kontaktleimdüse | 59 | Aktivierungsorgan |
| 33 | Punktleimdüse | 60 | Vollflächige Verbindung |
| 34 | Hotmelt-Materialstreifen | | |
| 35 | Hotmelt-Materialstreifen | | |

## Patentansprüche

1. Verfahren zum Herstellen von Beuteln (10) aus Folie zur Aufnahme von insbesondere einer Tabakportion in einer Tasche (11) mit Taschen-Vorderwand (14) und Taschen-Rückwand (15), wobei eine in Verlängerung der Taschen-Rückwand (15) gebildete Verschlusslasche (12), insbesondere Wickellasche, doppellagig ausgebildet ist, nämlich mit Außenlage (20) und Innenlage (21), **dadurch gekennzeichnet, dass** die Außenlage (20) und die Innenlage (21) der Verschlusslasche (12) lösbar miteinander verbunden werden, indem auf einer oder beiden Lagen (20, 21) aufgetragenes Hotmelt-Material (30) zur Verbindung dieser Lagen (20, 21) mit Ultraschall aktiviert wird, wobei das der Verbindung von Außenlage (20) und Innenlage (21) dienende Hotmelt-Material (30) innerhalb des Fertigungsprozesses der Beutel (10) aufgetragen wird, bevorzugt stromauf der Faltstation (28) auf die fortlaufende, insbesondere noch ungefaltete Folienbahn (25), und wobei dieses der Verbindung von Außenlage (20) und Innenlage (21) dienende, auf der Folienbahn (25) aufgetragene Hotmelt-Material (30) so auf der Folienbahn (25) positioniert ist, dass
a) die Innenlage (21) und die Außenlage (20) der jeweiligen Verschlusslasche (12) nach dem Aktivieren des Hotmelt-Materials (30) durch seitliche Verbindungsnähte (24, 23) miteinander verbunden sind sowie gegebenenfalls zusätzlich durch eine weitere, quer zu den seitlichen Verbindungsnähten (24, 23) gerichtete, die Verschlusslasche (12) im Endbereich der Außenlage (20) mit der Innenlage (21) verbindende Verbindungsnaht (57), oder dass
b) die Innenlage (21) und die Außenlage (20) vollflächig miteinander verbunden sind.

2. Verfahren gemäß Anspruch 1, **dadurch gekennzeichnet, dass** die Beutel (10) aus einer fortlaufenden Folienbahn (25) gefertigt werden, die eine Faltstation (28) durchläuft, in der fortlaufende Bahnschenkel (36) entsprechend der Abmessung der Innenlage (21) der jeweiligen Verschlusslasche (12) gefaltet und die fortlaufenden Bahnschenkel (36) auf einen die Außenlage (20) der jeweiligen Verschlusslasche (12) bildendenden Folienstreifen der fortlaufenden Folienbahn (25) aufgelegt werden.

3. Verfahren gemäß Anspruch 2, **dadurch gekennzeichnet, dass** die fortlaufenden Bahnschenkel (36) im Herstellungsprozess gefaltet werden, indem die ungefaltete Folienbahn (25) in der Faltstation (28) zwischen zwei die Folienbahn (25) seitlich führenden Führungsorganen (38, 39) der Faltstation (28) geführt wird, zwischen denen sie mit gefaltetem Bahnschenkel (36) verläuft und deren Abstand so bemessen ist, dass er der um die Querabmessung des Bahnschenkels (36) reduzierten Querabmessung der ungefalteten Folienbahn (25) entspricht, sodass sich zwischen einem Bereich stromauf der Führungsorgane (38, 39), in dem die Folienbahn (25) noch ungefaltet verläuft und den Führungsorganen (38, 39), zwischen denen die Folienbahn (25) gefaltet verläuft, ein Umfaltbereich (44) einstellt, in dem der Übergang der Folienbahn (25) von dem ungefalteten in den gefalteten Zustand erfolgt.

4. Verfahren gemäß Anspruch 3, **dadurch gekennzeichnet, dass** das Hotmelt-Material (30) als Streifen aufgetragen wird, insbesondere mittels mindestens einer Kontaktleimdüse oder einer Breitschlitzdüse, bevorzugt als mehrere separate Streifen oder als einzelner, die Innenlage (21) und die Außenlage (20) vollflächig verbindender Streifen, oder dass das Hotmelt-Material (30) punktförmig aufgetragen wird, insbesondere mittels einer oder mehreren Punktleimdüsen.

5. Verfahren gemäß einem oder mehreren der vorhergehenden Ansprüche, **dadurch gekennzeichnet, dass** das der Verbindung von Außenlage (20) und Innenlage (21) dienende, auf der Folienbahn (25) aufgetragene Hotmelt-Material (30) so auf der Folienbahn (25) positioniert ist, dass bei Auflegen der gefalteten Bahnschenkel (36) auf den die jeweiligen Außenlage (20) bildenden Folienstreifen auf dem Bahnschenkel (36) aufgetragenes Hotmelt-Material (30), zugeordnetes, auf diesem Folienstreifen aufgetragenes Hotmelt-Material (30) überdeckt.

6. Verfahren gemäß einem oder mehreren der vorhergehenden Patentansprüche, **dadurch gekennzeichnet, dass** die Aktivierung des Hotmelt-Materials (20) im Bereich einer Aktivierungsstation (49) erfolgt, in der mindestens eine Ultraschall-Sonotrode (50) das Hotmelt-Material (30) mit Ultraschall beaufschlagt.

7. Verfahren gemäß Anspruch 6, **dadurch gekennzeichnet, dass** die mindestens eine Ultraschall-Sonotrode (50) zur Aktivierung des Hotmelt-Materials (30) zur Anlage an die Folienbahn (25) gebracht wird, und dass bevorzugt die Ultraschall-Sonotrode (50) dabei zusammen mit einem Gegenorgan (52) Druck aufbringt.

8. Verfahren gemäß einem oder mehreren der vorhergehenden Patentansprüche, **dadurch gekennzeichnet, dass** die Art des verwendeten Hotmelt-Materials (30), die für die Verbindung der Innenlage (21) und der Außenlage (20) verwendete Menge desselben, sowie die Dauer und die Frequenz der Ultraschallbeaufschlagung während der Aktivierung des Hotmelt-Materials (30) so gewählt sind, dass die Innenlage (21) durch einen Benutzer ohne Zerstörung des Folienmaterials von der Außenlage (20) lösbar ist.

9. Verfahren gemäß einem oder mehreren der vorhergehenden Patentansprüche, **dadurch gekennzeichnet, dass** nach dem Verbinden der Innenlage (21) mit der Außenlage (20) die Folienbahn (25) zu nachfolgenden Einrichtungen gefördert wird, die aus der Folienbahn (25) die Beutel (10) als einzelne Abschnitte der Folienbahn (25) endfertigen, insbesondere die Taschen (11) bilden und die die Beutel (10) bildenden, einzelnen Abschnitte von der fortlaufenden Folienbahn (25) trennen.

10. Vorrichtung zum Herstellen von Beuteln (10) aus Folie zur Aufnahme von insbesondere einer Tabakportion in einer Tasche (11) mit Taschen-Vorderwand (14) und Taschen-Rückwand (15), wobei eine in Verlängerung der Taschen-Rückwand (15) gebildete Verschlusslasche (12). insbesondere Wickellasche, doppellagig ausgebildet ist, nämlich mit Außenlage (20) und Innenlage (21), **gekennzeichnet durch**
• ein Ultraschall-Aktivierungsorgan (49), mit dem auf einer oder beiden Lagen (20, 21) aufgetragenes Hotmelt-Material (30) zur lösbaren Verbindung dieser Lagen (20, 21) durch Beaufschlagung mit Ultraschall aktivierbar ist, und
• eine Faltstation (28), an der aus einer fortlaufenden Folienbahn (25) fortlaufende Bahnschenkel (36) entsprechend der Abmessung der Innenlage (21) der jeweiligen Verschlusslasche (12) gefaltet werden, insbesondere unter Verwendung von zwei die Folienbahn (25) seitlich führenden Führungsorganen (38, 39) der Faltstation (28), deren Abstand so bemessen ist, dass er der um die Querabmessung des Bahnschenkels (36) reduzierten Querabmessung der ungefalteten Folienbahn (25) entspricht, und an der die fortlaufenden Bahnschenkel (36) auf einen die Außenlage (20) der jeweiligen Verschlusslasche (12) bildendenden Folienstreifen der fortlaufenden Folienbahn (25) aufgelegt werden, wobei stromauf der Faltstation (28) eine Hotmelt-Auftragseinrichtung (27) mit ein oder mehreren Leimauftragsdüsen (32, 33, 58) angeordnet ist, mit der Hotmelt-Material (30) so auf die insbesondere ungefaltete Folienbahn (25) auftragbar ist, dass die Innenlage (21) und die Außenlage (20) der jeweiligen Verschlusslasche (12) nach dem Aktivieren des Hotmelt-Materials (30) durch das Ultraschall-Aktivierungsorgan (49) verbunden sind, insbesondere durch seitliche Verbindungsnähte (23, 24) aus dem Hotmelt-Material (30) sowie gegebenenfalls durch eine zusätzliche, quer zu den seitlichen Verbindungsnähten (24, 23) gerichtete, die Verschlusslasche (12) im Endbereich der Außenlage (20) mit der Innenlage (21) verbindende Verbindungsnaht (57) oder durch eine vollflächige Verbindung (60) der Innenlage (21) mit der Außenlage (20).

11. Vorrichtung gemäß Anspruch 10, **dadurch gekennzeichnet, dass** das Ultraschall-Aktivierungsorgan (49) stromab der Faltstation (28) angeordnet und mittels eines Servoantriebs (51) gegen die fortlaufende Folienbahn (25) verfahrbar ist.

12. Vorrichtung gemäß einem oder mehreren der Ansprüche 10-11 **dadurch gekennzeichnet, dass** sie ein separierbares Modul aufweist, wobei das Modul die Faltstation (28) beinhaltet, an der aus der fortlaufenden Folienbahn (25) fortlaufende Bahnschenkel (36) entsprechend der Abmessung der Innenlage (21) der jeweiligen Verschlusslasche (12) gefaltet werden und an der die fortlaufenden Bahnschenkel (36) auf den die Außenlage (20) der jeweiligen Verschlusslasche (12) bildendenden Folienstreifen der fortlaufenden Folienbahn (25) aufgelegt werden, sowie das Ultraschall-Aktivierungsorgan (49), mit dem an einer oder beiden Lagen (20, 21) aufgetragenes Hotmelt-Material (30) zur lösbaren Verbindung dieser Lagen durch Beaufschlagung mit Ultraschall aktivierbar ist.

13. Beutel aus Folie zur Aufnahme von insbesondere einer Tabakportion in einer Tasche (11) mit Taschen-Vorderwand (14), Taschen-Rückwand (15), wobei eine in Verlängerung der Taschen-Rückwand (15) gebildete Verschlusslasche (12), insbesondere Wickellasche, doppellagig ausgebildet ist, nämlich mit Außenlage (20) und Innenlage (21), **dadurch gekennzeichnet, dass** die Außenlage (20) und die Innenlage (21) der Verschlusslasche (12) lösbar durch durch Ultraschall aktivierbares Hotmelt-Material (30) miteinander verbunden sind, wobei die Außenlage (20) und die Innenlage (21) entweder vollflächig durch das mit Ultraschall aktivierbare Hotmelt-Material (30) miteinander verbunden sind oder durch seitliche Verbindungsnähte (23, 24) aus dem durch Ultraschall aktivierbaren Hot-Melt-Material (30) und gegebenenfalls zusätzlich durch eine weitere, quer zu den seitlichen Verbindungsnähten (24, 25) gerichtete, die Verschlusslasche (12) im Endbereich der Außenlage (20) mit der Innenlage (21) verbindende Verbindungsnaht (57).

## Claims

1. Method for manufacturing film bags (10) for receiving in particular a portion of tobacco in a pouch (11) comprising a pouch front wall (14) and a pouch rear wall (15), wherein a closure tab (12), in particular a wraparound tab, formed as an extension of the pouch rear wall (15) is of a double-ply design, specifically comprising an outer ply (20) and an inner ply (21), **characterized in that** the outer ply (20) and the inner ply (21) of the closure tab (12) are detachably connected to one another, **in that** hotmelt material (30) applied to one or both plies (20, 21) is activated by ultrasound to connect these plies (20, 21), wherein the hotmelt material (30) serving for connecting the outer ply (20) and the inner ply (21) is applied within the production process of the bags (10), preferably upstream of the folding station (28), to the continuous, in particular still unfolded film web (25), and wherein this hotmelt material (30) that serves for connecting the outer ply (20) and the inner ply (21) and has been applied to the film web (25) is positioned on the film web (25) in such a way that
a) after activating the hotmelt material (30), the inner ply (21) and the outer ply (20) of the respective closure tab (12) are connected to one another by lateral connecting seams (24, 23) and possibly additionally by a further connecting seam (57), which is directed transversely in relation to the lateral connecting seams (24, 23) and connects the closure tab (12) to the inner ply (21) in the end region of the outer ply (20), or that
b) the inner ply (21) and the outer ply (20) are connected to one another over their full surface areas.

2. Method according to Claim 1, **characterized in that** the bags (10) are produced from a continuous film web (25), which runs through a folding station (28), in which continuous web segments (36) are folded in a way corresponding to the dimension of the inner ply (21) of the respective closure tab (12) and the continuous web segments (36) are laid onto a film strip of the continuous film web (25) that forms the outer ply (20) of the respective closure tab (12).

3. Method according to Claim 2, **characterized in that** the continuous web segments (36) are folded in the manufacturing process **in that** in the folding station (28) the unfolded film web (25) is led between two guiding members (38, 39) of the folding station (28) that laterally guide the film web (25), between which it runs with a folded web segment (36) and the spacing of which is dimensioned such that it corresponds to the transverse dimension of the unfolded film web (25) reduced by the transverse dimension of the web segment (36), so as to create between a region upstream of the guiding members (38, 39), in which the film web (25) still runs unfolded, and the guiding members (38, 39), between which the film web (25) runs folded, a folding-over region (44), in which the transformation of the film web (25) from the unfolded state to the folded state takes place.

4. Method according to Claim 3, **characterized in that** the hotmelt material (30) is applied as strips, in particular by means of at least one contact-glue nozzle or a wide-slot nozzle, preferably as a number of separate strips or as individual strips connecting the inner ply (21) and the outer ply (20) over their full surface areas, or **in that** the hotmelt material (30) is applied in the form of spots, in particular by means of one or more spot-glue nozzles.

5. Method according to one or more of the preceding claims, **characterized in that** the hotmelt material (30) that serves for connecting the outer ply (20) and the inner ply (21) and has been applied to the film web (25) is positioned on the film web (25) in such a way that, when the folded web segment (36) is laid onto the film strip forming the respective outer ply (20), hotmelt material (30) applied to the web segment (36) covers over assigned hotmelt material (30) applied to this film strip.

6. Method according to one or more of the preceding patent claims, **characterized in that** the activation of the hotmelt material (20) takes place in the region of an activating station (49), in which the hotmelt material (30) is exposed to ultrasound by at least one ultrasound sonotrode (50).

7. Method according to Claim 6, **characterized in that** the at least one ultrasound sonotrode (50) for activating the hotmelt material (30) is brought to bear against the film web (25), and **in that** preferably the ultrasound sonotrode (50) thereby acts together with a counter member (52) to apply pressure.

8. Method according to one or more of the preceding patent claims, **characterized in that** the type of hotmelt material (30) that is used, the amount of the same that is used for connecting the inner ply (21) and the outer ply (20), and also the duration and frequency of the ultrasound exposure during the activation of the hotmelt material (30) are chosen such that the inner ply (21) can be detached from the outer ply (20) by a user without destroying the film material.

9. Method according to one or more of the preceding patent claims, **characterized in that**, after connecting the inner ply (21) to the outer ply (20), the film web (25) is conveyed to subsequent devices, which finish the production of the bags (10) from the film web (25) as individual portions of the film web (25), in particular form the pockets (11) and separate from the continuous film web (25) the individual portions that form the bags (10) .

10. Device for manufacturing film bags (10) for receiving in particular a portion of tobacco in a pouch (11) comprising a pouch front wall (14) and a pouch rear wall (15), wherein a closure tab (12), in particular a wraparound tab, formed as an extension of the pouch rear wall (15) is of a double-ply design, specifically comprising an outer ply (20) and an inner ply (21), **characterized by**
• an ultrasound activating member (49), with which hotmelt material (30) applied to one or both plies (20, 21) can be activated by exposure to ultrasound for detachably connecting these plies (20, 21), and
• a folding station (28), at which continuous web segments (36) from a continuous film web (25) are folded in a way corresponding to the dimension of the inner ply (21) of the respective closure tab (12), in particular using two guiding members (38, 39) of the folding station (28) that laterally guide the film web (25), the spacing of which is dimensioned such that it corresponds to the transverse dimension of the unfolded film web (25) reduced by the transverse dimension of the web segment (36), and at which the continuous web segments (36) are laid onto a film strip of the continuous film web (25) that forms the outer ply (20) of the respective closure tab (12), wherein there is arranged upstream of the folding station (28) a hotmelt applicator (27) comprising one or more glue application nozzles (32, 33, 58), with which hotmelt material (30) can be applied to the in particular unfolded film web (25) in such a way that the inner ply (21) and the outer ply (20) of the respective closure tab (12) are connected after the activation of the hotmelt material (30) by the ultrasound activating member (49), in particular by lateral connecting seams (23, 24) of the hotmelt material (30) and possibly by an additional connecting seam (57), which is directed transversely in relation to the lateral connecting seams (24, 23) and connects the closure tab (12) to the inner ply (21) in the end region of the outer ply (20) or by a connection (60) of the inner ply (21) to the outer ply (20) over their full surface area.

11. Device according to Claim 10, **characterized in that** the ultrasound activating member (49) is arranged downstream of the folding station (28) and can be moved towards the continuous film web (25) by means of a servo drive (51).

12. Device according to one or more of Claims 10-11, **characterized in that** it has a separable module, wherein the module comprises the folding station (28), at which continuous web segments (36) from the continuous film web (25) are folded in a way corresponding to the dimension of the inner ply (21) of the respective closure tab (12) and at which the continuous web segments (36) are laid onto the film strip of the continuous film web (25) that forms the outer ply (20) of the respective closure tab (12), and the ultrasound activating member (49), with which hotmelt material (30) applied to one or both plies (20, 21) can be activated by exposure to ultrasound for detachably connecting these plies.

13. Film bag for receiving in particular a portion of tobacco in a pouch (11) comprising a pouch front wall (14) and a pouch rear wall (15), wherein a closure tab (12), in particular a wraparound tab, formed as an extension of the pouch rear wall (15) is of a double-ply design, specifically comprising an outer ply (20) and an inner ply (21), **characterized in that** the outer ply (20) and the inner ply (21) of the closure tab (12) are detachably connected to one another by hotmelt material (30) that can be activated by ultrasound, wherein the outer ply (20) and the inner ply (21) are either connected to one another over their full surface areas by the hotmelt material (30) that can be activated by ultrasound or by lateral connecting seams (23, 24) of the hotmelt material (30) that can be activated by ultrasound and possibly additionally by a further connecting seam (57), which is directed transversely in relation to the lateral connecting seams (24, 25) and connects the closure tab (12) to the inner ply (21) in the end region of the outer ply (20).

## Revendications

1. Procédé de fabrication de sachets (10) en film pour reprendre en particulier une portion de tabac dans une poche (11) dotée d'une paroi avant (14) de poche et d'une paroi arrière (15) de poche, une patte de fermeture (12), en particulier une patte enroulée, en couche double, c'est-à-dire présentant une couche extérieure (20) et une couche intérieure (21), étant formée en prolongement de la paroi arrière (15) de poche,
**caractérisé en ce que**
la couche extérieure (20) et la couche intérieure (21) de la patte de fermeture (12) sont reliées les unes aux autres de manière libérable en activant par ultrasons un matériau (30) fusible à chaud appliqué sur une des couches (20, 21) ou les deux pour relier ces couches (20, 21),
**en ce que** le matériau (30) fusible à chaud servant à relier la couche extérieure (20) à la couche intérieure (21) est appliqué au cours des opérations de fabrication du sachet (10), de préférence en amont du poste de pliage (28), sur la nappe de film (25) en cours d'avancement, en particulier non encore repliée, et
**en ce que** ce matériau (30) fusible à chaud servant à relier la couche extérieure (20) à la couche intérieure (21), appliqué sur la nappe de film (25), est disposé sur la nappe de film (25) de telle sorte que
a) la couche intérieure (21) et la couche extérieure (20) de chaque patte de fermeture (12) sont reliées l'une à l'autre par des cordons latéraux de liaison (24, 23) après l'activation du matériau (30) fusible à chaud, et éventuellement en supplément par un autre cordon de liaison (57) orienté transversalement par rapport aux cordons de liaison latéraux (24, 23) et qui relient à la couche intérieure (21) la partie d'extrémité de la couche extérieure (20) de la patte de fermeture (12) ou
b) **en ce que** la couche intérieure (21) et la couche extérieure (20) sont reliées l'une à l'autre sur toute leur surface.

2. Procédé selon la revendication 1, **caractérisé en ce que** les sachets (10) sont réalisés à partir d'une nappe de film (25) qui s'avance en traversant un poste de pliage (28), dont l'aile (36) est repliée pendant son avancement en correspondance aux dimensions de la couche intérieure (21) de la patte de fermeture (12) concernée, les ailes (36) de la bande étant placées pendant leur avancement sur un ruban de la nappe de film (25), qui s'avance également, et qui forme la couche extérieure (20) de la patte de fermeture (12).

3. Procédé selon la revendication 2, **caractérisé en ce que** les ailes (36) de la bande sont repliées pendant leur avancement dans l'opération de fabrication en amenant la nappe de film (25) non pliée dans le poste de pliage (28) entre deux organes de guidage (38, 39), qui guident latéralement la nappe de film (25), du poste de pliage (28), entre lesquels l'aile repliée (36) de la bande s'étend et dont l'écartement est dimensionné de telle sorte qu'il corresponde aux dimensions transversales de la nappe de film (25) non pliée, réduites aux dimensions transversales de l'aile (36) de la bande de telle sorte qu'entre une zone située en amont des organes de guidage (38, 39), dans laquelle la nappe de film (25) n'est pas encore pliée et les organes de guidage (38, 39) entre lesquels la nappe de film (25) s'étend après avoir été pliée, il s'établisse une zone de pliage (44) dans laquelle a lieu le passage de la nappe de film (25) de l'état non plié à l'état plié.

4. Procédé selon la revendication 3, **caractérisé en ce que** le matériau (30) fusible à chaud est appliqué sous la forme de ruban, en particulier au moyen d'au moins une tuyère à colle de contact ou d'une tuyère à large de fente, de préférence sous la forme de plusieurs rubans séparés ou de rubans distincts qui relient la totalité de la surface de la couche intérieure (21) et de la couche extérieure (20), ou **en ce que** le matériau (30) fusible à chaud est appliqué de manière ponctuelle, en particulier au moyen d'une ou plusieurs tuyères de collage ponctuel.

5. Procédé selon l'une ou plusieurs des revendications précédentes, **caractérisé en ce que** le matériau (30) fusible à chaud appliqué sur la nappe de film (25) pour assurer la liaison entre la couche extérieure (20) et la couche intérieure (21) est placé sur la nappe de film (25) de telle sorte que lorsque l'aile repliée (36) de la bande est placée sur le ruban de feuille qui forme la couche extérieure (20), le matériau (30) fusible à chaud appliqué sur l'aile repliée (36) recouvre le matériau (30) fusible à chaud appliqué sur ce ruban de film.

6. Procédé selon l'une ou plusieurs des revendications précédentes, **caractérisé en ce que** l'activation du matériau (20) fusible à chaud s'effectue au niveau d'un poste d'activation (49) dans lequel au moins une sonotrode (50) à ultrasons applique des ultrasons sur le matériau (30) fusible à chaud.

7. Procédé selon la revendication 6, **caractérisé en ce que** la ou les sonotrodes (50) destinées à activer le matériau (30) fusible à chaud sont amenées à se placer sur la nappe de film (25) et **en ce que** la sonotrode (50) exerce de préférence une poussée en même temps qu'un organe complémentaire (52).

8. Procédé selon l'une ou plusieurs des revendications précédentes, **caractérisé en ce que** la nature du matériau (30) fusible à chaud, sa quantité utilisée pour relier la couche intérieure (21) à la couche extérieure (20) ainsi que la durée de l'application des ultrasons et leur fréquence pendant l'activation du matériau (30) fusible à chaud sont sélectionnés de telle sorte que la couche intérieure (21) puisse être détachée de la couche extérieure (20) par un utilisateur sans détruire le matériau du film.

9. Procédé selon l'une ou plusieurs des revendications précédentes, **caractérisé en ce qu'**après la liaison de la couche intérieure (21) à la couche extérieure (20), la nappe de film (25) est transportée vers des dispositifs suivants qui forment à partir de la nappe de film (25) les sachets (10) sous la forme de sections séparées de nappe de film (25), en particulier pour former les poches (11) et séparer de la nappe de film (25) les sections distinctes formant les sachets (10), pendant l'avancement de la nappe.

10. Ensemble de fabrication de sachets (10) en film pour reprendre en particulier une portion de tabac dans une poche (11) dotée d'une paroi avant (14) de poche et d'une paroi arrière (15) de poche, une patte de fermeture (12), en particulier une patte enroulée, en couche double, c'est-à-dire présentant une couche extérieure (20) et une couche intérieure (21), étant formée en prolongement de la paroi arrière (15) de poche,
**caractérisé par**
un organe (49) d'activation par ultrasons par lequel un matériau (30) fusible à chaud appliqué sur l'une des couches (20, 21) ou les deux peut être activé par application d'ultrasons en vue de relier ces couches (20, 21) de manière libérable et
un poste de pliage (28) sur lequel, à partir d'une nappe de film (25) en déplacement, des ailes (36) de la nappe en déplacement sont repliées en correspondance aux dimensions de la couche intérieure (21) de la patte de fermeture (12) concernée, en particulier en recourant à deux organes de guidage (38, 39) du poste de pliage (28), qui guident latéralement la nappe de film (25), dont l'écartement est dimensionné de telle sorte qu'il corresponde aux dimensions transversales de la nappe de film (25) non pliée réduites aux dimensions transversales de l'aile (36) de la bande et sur lequel les ailes (36) en déplacement sont placées sur un ruban de film de la nappe de film (25) en déplacement, qui forme la couche extérieure (20) de la patte de fermeture (12), un dispositif (27) d'application d'un matériau fusible à chaud présentant une ou plusieurs tuyères (32, 33, 58) d'application de colle étant disposé en amont du poste de pliage (28) et permettant d'appliquer le matériau (30) fusible à chaud sur la nappe de film (25) en particulier non repliée, de telle sorte que la couche intérieure (21) et la couche extérieure (20) de chaque patte de fermeture (12) soient reliées l'une à l'autre après l'activation du matériau (30) fusible à chaud par l'organe (49) d'activation par ultrasons, en particulier par des cordons latéraux de liaison (23, 24) constitués du matériau (30) fusible à chaud ainsi qu'éventuellement par un cordon de liaison (57) supplémentaire orienté transversalement par rapport aux cordons de liaison latéraux (24, 23), reliant à la couche intérieure (21) l'extrémité de la couche extérieure (20) de la patte de fermeture (12), ou par une liaison (60) de la couche extérieure (20) à la couche intérieure (21) sur toute leur surface.

11. Ensemble selon la revendication 10, **caractérisé en ce que** l'organe (49) d'activation par ultrasons est disposé en aval du poste de pliage (28) et peut être déplacé au moyen d'un servo-entraînement (51) en direction de la nappe de film (25).

12. Ensemble selon l'une ou plusieurs des revendications 10 à 11, **caractérisé en ce qu'**il présente un module séparable, le module contenant un poste de pliage (28) sur lequel, à partir d'une nappe de film (25) en déplacement, des ailes (36) de la nappe en déplacement sont repliées en correspondance aux dimensions de la couche intérieure (21) de la patte de fermeture (12) concernée et sur lequel les ailes (36) de la nappe en avancement sont placées la couche extérieure (20) des rubans de film de la nappe de film (25) en déplacement qui forment la patte de fermeture (12), et l'organe (49) d'activation par ultrasons par lequel le matériau (30) fusible à chaud appliqué sur une ou deux des couches (20,21) peut être activé par ultrasons pour relier ces couches de manière libérable.

13. Sachet en film servant à reprendre en particulier une portion de tabac dans une poche (11) dotée d'une paroi avant (14) de poche et d'une paroi arrière (15) de poche, une patte de fermeture (12), en particulier une patte enroulée, en couche double, c'est-à-dire présentant une couche extérieure (20) et une couche intérieure (21), étant formée en prolongement de la paroi arrière (15) de poche,
**caractérisé en ce que**
la couche extérieure (20) et la couche intérieure (21) de la patte de fermeture (12) sont reliées les unes aux autres de manière libérable par matériau (30) fusible à chaud activable par ultrasons,
la couche extérieure (20) et la couche intérieure (21) étant reliées l'une à l'autre sur toute leur surface par le matériau (30) fusible à chaud activable par ultrasons, ou par des cordons latéraux de liaison (23, 24) constitués par le matériau (30) fusible à chaud activable par ultrasons ainsi qu'éventuellement par un cordon de liaison (57) supplémentaire orienté transversalement par rapport aux cordons de liaison latéraux (24, 25), reliant à la couche intérieure (21) l'extrémité de la couche extérieure (20) de la patte de fermeture (12).
